# EUROPÄISCHE PATENTANMELDUNG

(11) **EP 1 142 765 A2**
(43) Veröffentlichungstag der Anmeldung: **10.10.2001**
(21) Anmeldenummer: 01104816.2
(22) Anmeldetag: 27.02.2001
(51) Int. Cl.: B60R 25/02

(54) **Einrichtung zum Sperren der Drehbarkeit einer Lenkspindel eines Kraftfahrzeuges**

(30) Priorität: 08.04.2000 DE 10017591
(71) Anmelder: Leopold Kostal GmbH & Co. KG, 58507 Lüdenscheid (DE); Bayerische Motoren Werke Aktiengesellschaft, 80809 München (DE)
(72) Erfinder: Donner, Harald, 58540 Meinerzhagen (DE); Volmer, Werner, 58640 Iserlohn (DE); Welschholz, Jörg, 58849 Herscheid (DE); Schambeck, Bernhard, 80469 München (DE)
(74) Vertreter: Schröter & Haverkamp

(57) **Zusammenfassung**

Eine Einrichtung zum Sperren der Drehbarkeit der Lenkspindel 3 eines Kraftfahrzeugs umfassend ein bewegbares, in seiner Sperrstellung in die Lenkspindel 3 eingreifend angeordnetes, in einem Schloßraum 12 befindliches Riegelglied 14 sowie eine Betätigungseinrichtung 9 zum Betätigen des Riegelgliedes 14, ist dadurch bestimmt, daß der Schloßraum 12 gegenüber einem manipulativen Eingriff passiv durch zum selbständigen Fahren des Kraftfahrzeuges benötigte, elektrische/elektronische Betriebskomponenten K dadurch gesichert ist, daß diese Betriebskomponenten K in einer solchen Lage bezüglich des Schloßraumes 12 angeordnet sind, daß bei einem manipulativen Eingriff die Funktionstüchtigkeit von zumindest einer solchen Betriebskomponente K zerstört ist.

## Beschreibung

Die Erfindung betrifft eine Einrichtung zum Sperren der Drehbarkeit der Lenkspindel eines Kraftfahrzeugs - eine Lenkspindelsperreinrichtung - umfassend ein bewegbares, in seiner Sperrstellung in die Lenkspindel eingreifend angeordnetes, in einem Schloßraum befindliches Riegelglied sowie eine Betätigungseinrichtung zum Betätigen des Riegelgliedes.

Die Lenkspindelsperreinrichtung ist eine diebstahlrelevante Einheit, die zum Erhöhen der Diebstahlsicherheit des Fahrzeuges gegenüber einem unbefugten manipulativen Eingriff in einem durch einen Schloßkörper gebildeten Schloßraum aufgenommen ist. Eine solche Lenkspindelsperreinrichtung besteht aus einem Riegelglied, das in seiner Verriegelungsstellung zum Blockieren der Drehbewegung der Lenkspindel in eine in die Lenkspindel eingebrachte Riegelaufnahme eingreift. Als Riegelglied ist üblicherweise ein nach Art eines Schließbolzens ausgebildeter Riegel vorgesehen, der in radialer Richtung zur Drehachse der Lenkspindel verschieblich angeordnet ist. Der Lenkspindelsperreinrichtung ist ferner eine Betätigungseinrichtung zugeordnet, mit der der Riegelbolzen betätigbar ist, d.h. mit der der Riegelbolzen aus seiner in die Lenkspindel eingreifenden Verriegelungsstellung in seine eine Drehbewegung der Lenkspindel freigebende Stellung verschiebbar ist. Die Betätigungseinrichtung kann mechanisch realisiert sein, wie dies bei herkömmlichen Lenkspindelsperreinrichtungen der Fall ist, bei denen eine Entriegelung der Lenkspindel durch Drehen des Zündschlüssels im Schließzylinder erfolgt. Bei einer derartigen mechanischen Kopplung zwischen der Drehachse des Zündschlüssels und der Verschiebebewegung des Riegelbolzens ist die Längsachse des Riegelbolzens entweder rechtwinklig zur Drehachse des Zündschlüssels oder mit dieser fluchtend angeordnet. Dies bedingt eine schräge bzw. winklige Anordnung des Riegelbolzens zur Längsachse der Lenkspindel.

Der das Riegelglied einschließende Schloßkörper ist stabil ausgebildet, um als mechanisch wirksame Sperre einen direkten Zugriff auf das Riegelglied zu verhindern bzw. zu behindern. Der Schloßkörper ist ein zylindrischer Ringkörper aus Metall, der aufgrund seiner komplizierten Formgebung im Wege eines Gußverfahrens hergestellt wird und der unmittelbar das Riegelglied bzw. seine Führung aufnimmt. Um eine Demontage der Lenkspindelsperreinrichtung zur erschweren, ist der Schloßkörper einstückig, damit ein manipulativer Zugriff auf das Riegelglied nicht durch Ausbilden einer Schwächezone, die durch die Verbindung mehrerer Schloßkörperteile zur Ausbildung des Schloßkörpers vorhanden wären, erleichtert ist. Der aus Zinkdruckguß hergestellte Schloßkörper vermag jedoch einem Angriff mit einem Kältemittel, beispielsweise einem Kältespray nicht die notwendige Widerstandsfähigkeit entgegen zu setzen. Ohne weiteres kann der Schloßkörper im tiefgekühlten Zustand zerstört werden, so daß der Zugang zu dem Riegelglied frei ist und in einem solchen Fall das Fahrzeug lenkbar gemacht werden kann. Das Fahrzeug kann somit von einem unberechtigten Nutzer auch weggefahren werden.

Um eine solche Lenkspindelsperreinrichtungsmanipulation zur erschweren, sind zum Teil Schloßkörper eingesetzt worden, die eine übermäßige Dicke zur Panzerung der Lenkspindelsperreinrichtung bzw. seines Riegelgliedes samt Führung aufweisen. Eine solche Maßnahme hat jedoch zur Folge, daß der Schloßkörper nicht nur aufwendig in seiner Herstellung ist, sondern auch ein größeres Gewicht aufweist sowie einen größeren Einbauraum benötigt. Dies ist jedoch unerwünscht.

Eine weitere Sicherungseinrichtung für eine Lenkspindelverriegelungseinrichtung ist aus US 5 793 122 A bekannt. Gegenstand dieses Dokumentes ist eine Sicherungseinrichtung zum Schützen des Lenkradschlosses eines Kraftfahrzeuges. Eine Sicherung erfolgt bei dem Gegenstand der US 5 793 122 A durch Vorsehen aktiver elektrischer/elektronischer Sicherungseinrichtungen, beispielsweise Schalter oder Drähte oder dergleichen, wobei bei einer Zerstörung eines solchen Drahtes oder bei einer Auslösung eines solchen Schalters eine bestimmte Sicherungsaktion ausgeführt wird. Das in diesem Dokument beschriebene Sicherungssystem arbeitet unter Einsatz eines herkömmlichen Sicherungssystems, wie beispielsweise bei Schaufensterscheiben, in denen Alarmdrähte eingebracht sind. Bei einer Zerstörung eines solchen Drahtes in einer solchen Fensterscheibe wird entsprechend der Alarm ausgelöst. Die Übernahme dieses an sich sehr alten Sicherungskonzeptes zum Schutze eines Lenkradschlosses eines Kraftfahrzeuges bedingt jedoch, daß in dem ohnehin nur beschränkt zur Verfügung stehenden Einbauraum eines solchen Lenkradschlosses zusätzlich Komponenten untergebracht werden müssen, nämlich die Sicherungskomponenten. Demzufolge muß ein entsprechend großer Einbauraum für diese Komponenten zur Verfügung stehen, was jedoch nicht immer der Fall ist.

Überdies ist zu befürchten, daß eine solche vorbekannte Sicherungseinrichtung, insbesondere, wenn das Lenkradschloß mit Drähten gesichert werden soll, die von solchen Drähten ausgehende elektromagnetische Strahlung die ansonsten in dem Bereich des Lenkradschlosses angeordneten elektronischen Komponenten stören kann. Folglich ist es nicht unproblematisch, eine solche Sicherungseinrichtung, wie in der US 5 793 122 A beschrieben, tatsächlich einsetzen zu können.

Ausgehend von diesem diskutierten Stand der Technik liegt der Erfindung daher die Aufgabe zugrunde, eines Kraftfahrzeuges dergestalt weiterzubilden, daß nicht nur ein besserer Schutz der Lenkspindelsperreinrichtung gewährleistet ist, ohne daß zu diesem Zweck ein größerer Einbauraum benötigt wäre, und daß insbesondere die Funktionstüchtigkeit vorhandener elektronischer Komponenten nicht beeinträchtigt wird, und wenn diese Aufgabe erfindungsgemäß dadurch gelöst wird.

Diese Aufgabe wird erfindungsgemäß dadurch gelöst, daß der Schloßraum gegenüber einem manipulativen Eingriff passiv durch zum selbständigen Fahren des Kraftfahrzeuges benötigte, elektrische/elektronische Betriebskomponenten dadurch gesichert ist, daß diese Betriebskomponenten in einer solchen Lage bezüglich des Schloßraumes angeordnet sind, daß bei einem manipulativen Eingriff die Funktionstüchtigkeit von zumindest einer solchen Betriebskomponente zerstört ist.

Bei der beanspruchten Einrichtung zum Sperren der Drehbarkeit der Lenkspindel eines Kraftfahrzeuges sind im Gegensatz zum Gegenstand der US 5 793 122 A nicht zusätzliche Komponenten eingesetzt, sondern der Schloßraum ist passiv durch eine geschickte Anordnung ohnehin vorhandener elektrischer/elektronischer Betriebskomponenten gesichert. Dazu ist vorgesehen, daß die ohnehin im Bereich des Schloßraumes an der Lenkspindel angeordneten elektrischen/elektronischen Betriebskomponenten, und zwar solche, die zum selbständigen Fahren des Kraftfahrzeuges benötigt sind, räumlich dergestalt zum Schloßraum angeordnet sind, daß zumindest aus denjenigen Richtungen, aus denen ein manipulativer Eingriff zu erwarten ist, die Zugriffrichtung versperrt ist. Dies hat zur Folge, daß bei einem manipulativen Zugriff zunächst zumindest eine solche elektrische/elektronische Betriebskomponente zu zerstören ist, bevor man Zugang zu der Lenkspindelsperreinrichtung erhält. Nach einer Zerstörung einer solchen Betriebskomponente ist das Kraftfahrzeug jedoch nicht mehr fahrtüchtig. Ein derartiger Schutz ist daher als passiv zu bezeichnen, wodurch insbesondere mangels benötigter zusätzlicher Elemente weder ein größerer Einbauraum notwendig ist, noch sind die im Bereich der Lenkspindel angeordneten elektrischen/elektronischem Betriebskomponenten unerwünschten Störungen ausgesetzt.

Ein Eindringen in den Schloßraum führt bei dieser Lenkspindelsperreinrichtung zu einer Zerstörung zumindest eines der eingesetzten elektrischen/elektronischen Komponenten, so daß anschließend das Fahrzeug nicht mehr selbständig angelassen und gefahren werden kann. Wenn bei vorbekannten Schloßkörpern ein gezielter manipulativer Angriff auf den Schloßkörper durchaus zu einer Entriegelung des Riegelgliedes und somit zu einer Freigabe der Drehbewegung der Lenkspindel führen konnte, so ist eine solche Maßnahme beim Gegenstand der beanspruchten Erfindung aufgrund der möglichen dichten Anordnung der elektrischen/elektronischen Komponenten quasi unmöglich. Das Riegelglied kann beispielsweise von elektrischen Leitern umgeben sein, wobei nach einer Durchtrennung bereits eines einzigen Leiters ein Anlassen des Fahrzeuges gesperrt ist. Besonders zweckmäßig ist es, das Riegelglied mit solchen elektrischen/elektronischen Komponenten zu sichern, die zum Fahren des Fahrzeuges nicht nur relevant sondern zwingend notwendig sind und die sich ohnehin im Bereich der Lenkspindelsperreinrichtung üblicherweise befinden, wie beispielsweise die elektrischen/elektronischen Komponenten einzelner Funktionsmodule eines Lenksäulenmoduls.

Die Sicherung des Riegelgliedes bzw. des gesamten Schloßraumes mit den beschriebenen elektrischen/elektronischen Komponenten gestattet, daß die Ausbildung einer mechanischen Sperre, wie im vorbekannten Stand der Technik durch den massiven Schloßkörper realisiert, grundsätzlich sehr viel schwächer ausgebildet sein kann. Dennoch ist die Wirksamkeit einer solchen elektrischen/elektronischen Sperre gegenüber Angriffen im Hinblick auf die Möglichkeit eines selbständigen Fahrens des Kraftfahrzeuges erhöht.

Die Betätigungseinrichtung kann gleichfalls in dem Schloßraum zusammen mit der Lenkspindelverriegelungseinrichtung angeordnet sein oder auch durch entsprechende Maßnahmen geschützt sein.

Es können unterschiedliche elektrische/elektronische Betriebskomponenten zum Schutze des Riegelgliedes in dem Schloßraum angeordnet sein. Beispielsweise können in dem Schloßraum elektrische Steckverbinder dergestalt angeordnet sein, daß bei einem manipulativen Eingriff auf eine den Schloßraum begrenzende Gehäuseschale einer oder mehrere dieser Steckverbinder zerstört wird, wodurch zum Fahren des Kraftfahrzeuges relevante oder notwendige Funktionen nicht mehr funktionstüchtig sind. In einer weiteren Ausgestaltung ist vorgesehen, daß die elektrischen/elektronischen Betriebskomponenten auf einer oder mehreren Leiterplatten, beispielsweise flexiblen Leiterplatten angeordnet sind, die zumindest in denjenigen Bereichen, in denen ein manipulativer Eingriff zu erwarten ist, als Schutzschild zu dem in dem Schloßraum befindlichen Riegelglied bzw. zu der Betätigungseinrichtung angeordnet sind. Bei diesen elektrischen/elektronischen Komponenten kann es sich um solche handeln, die eigens zum Schutz des Riegelgliedes in den Schloßraum eingebracht werden oder auch um solche, die für den Fall, daß die Lenkspindelsperreinrichtung Teil eines Lenksäulenmodules ist, den übrigen, in dem Lenksäulenmodul zusammengefaßten Funktionsmodulen zugehörig sind.

In noch einer weiteren Ausgestaltung ist der Schloßraum durch eine untere Tragschale sowie eine Oberschale begrenzt, wobei die Oberschale Träger einer elektrische/elektronische Komponenten tragenden Leiterplatte ist. Von der unteren Tragschale abragend und den Schloßraum querend sind Fortsätze angeordnet, die sich bis in den Bereich der elektrischen/elektronischen Betriebskomponenten der Leiterplatte erstrecken.

Bei einer Verformung der unteren Tragsschale, beispielsweise infolge eines versuchten Kälteangriffs mit Hammerschlägen, dienen die Fortsätze als Dorne, die in die elektronischen/elektrischen Betriebskomponenten bei einem solchen Angriff eindringen und diese zerstören.

Besonders zweckmäßig ist der Einsatz einer solchen Lenkspindelsperreinrichtung, wenn diese Teil eines Lenksäulenmoduls ist, wobei der Schloßraum dieses Lenksäulensmoduls durch eine untere Tragschale begrenzt ist, mit der gleichzeitig eine Anbindung des Lenksäulenmoduls am Mantelrohr der Lenksäule erfolgt. Der Schloßraum ist oberseitig ebenfalls durch eine Schale begrenzt, die sich beispielsweise über Befestigungsfüße an der unteren Tragschale abstützt. Die Oberschale dient als Träger für die Funktionsmodule des Lenksäulenmoduls. In radialer Richtung ist der Schloßraum durch eine Außenwand begrenzt, die entweder an der unteren Tragschale, an der Oberschale oder anteilig an beiden Schalen angeformt ist. Durch diese Maßnahme ist ein Schloßraum gebildet, der die Lenkspindel einschließt und sich ringförmig um diese erstreckt. Dieser gesamte Raum kann nunmehr ausgenutzt werden, um darin eine Lenkspindelsperreinrichtung anzuordnen, wobei insbesondere eine Beabstandung der Lenkspindelsperreinrichtung von der unteren Tragschale zweckmäßig ist. Über geeignete Befestigungsmittel kann sich die Lenkspindelsperreinrichtung an der unteren Tragplatte abstützen. In dem Schloßraum kann eine Lenkspindelsperreinrichtung quasi beliebig angeordnet sein.

Die Tragschale kann aufgrund seiner im wesentlichen flächigen Erstrekkung aus einem Metallblech, insbesondere aus einem solchen mit einer besonderen Härte und einer ausreichenden Zähigkeit auf einfache Weise im Wege eines Kaltumformprozesses hergestellt werden. Die Widerstandsfähigkeit eines solchen Bleches gegenüber einem Angriff auf die Lenkspindelsperreinrichtung ist materialbedingt sehr viel höher als diejenige, die ein vorbekannter Schloßkörper einem Angreifer entgegenzusetzen vermag. Ein Einsatz derartiger Materialien bei vorbekannten Schloßkörpern ist nicht möglich, da diese sich nicht zum Gießen eignen. Für eine solche Tragschale kann somit ein Material eingesetzt werden, die im Gegensatz zum vorbekannten Stand der Technik nicht gegossen, sondern auf kostengünstige Weise durch einen Kaltumformvorgang, beispielsweise Tiefziehen hergestellt werden.

Die den Schloßraum oberseitig begrenzende Oberschale dient ebenfalls, um einen manipulativen Zugriff in den Schloßraum zu verhindern bzw. entgegenzuwirken. Ferner dient die sich auf der unteren Tragschale abstützende Oberschale auch dazu, zumindest ein weiteres Funktionsmodul, beispielsweise einen Lenkstockschalter aufzunehmen. Die Oberschale kann auch als Träger eingesetzt sein, um Funktionsmodule zu tragen, die in mehreren Ebenen übereinander angeordnet sind.

Weitere Vorteile und zweckmäßige Ausgestaltungen der Erfindung ergeben sich aus weiteren Unteransprüchen sowie der nachfolgenden Beschreibung von zwei Ausführungsbeispielen unter Bezugnahme auf die beigefügten Figuren. Es zeigen:
- **Fig. 1:**: Einen schematisierten Längsschnitt durch ein Lenksäulenmodul mit einer Lenkspindelsperreinrichtung gemäß einem ersten Ausführungsbeispiel und
- **Fig. 2:**: Einen schematisierten Längsschnitt durch ein Lenksäulenmodul mit einer Lenkspindelsperreinrichtung gemäß einem weiteren Ausführungsbeispiel .

Ein Lenksäulenmodul 1 besteht aus einer unteren Tragschale 2, die die Lenkspindel 3 einer Lenksäule 4 einschließt und diese etwa konzentrisch umgibt. Die Tragschale 2 weist eine mittlere Öffnung 5 auf, durch die die Lenkspindel 3 hindurchgreift. Die Öffnung 5 ist durch einen nach außen umgebördelten Befestigungsrand 6 gebildet, der am Mantelrohr 7 der Lenksäule 4 festgesetzt ist. Die untere Tragschale 2 ist aus einem Metallblech besonderer Härte und hoher Zähigkeit gefertigt, so daß diese mechanischen und thermischen Angriffen besonders resistent gegenübersteht.

Die untere Tragschale 2 weist eine äußere umlaufende Außenwand 8 auf, die lediglich im Bereich des Schließzylinders 9 durch diesen unterbrochen ist. Zur zusätzlichen Aussteifung der unteren Tragschale 2 ist eine konzentrisch zur Öffnung 5 angeordnete ringförmige Sicke 10 vorgesehen.

Die durch den Befestigungsrand 6 und die Sicke 10 gebildete ringförmige Aufnahme dient zum Umlenken eines das Mantelrohr 7 umgebenden Crashelementes C. Über in der Figur nicht dargestellte Befestigungsbolzen stützt sich auf der unteren Tragschale 2 eine Oberschale 11, ebenfalls aus einem harten, zweckmäßigerweise auch zähen Metall hergestellt ab. Durch die untere Tragschale 2, die Außenwand 8 und die Oberschale 11 ist ein Schloßraum 12 gebildet, in dem eine Lenksäulensperreinrichtung 13 angeordnet ist. Die Lenkspindelsperreinrichtung 13 ist flach bauend und umfaßt ein Riegelglied 14, welches sich ringförmig um die Lenkspindel 2 herum erstreckt. Bei dieser Lenkspindelsperreinrichtung 13 erfolgt eine tatsächliche Verriegelung der Lenkspindel 2 durch einen Riegelzapfen 15 an der dem Schließzylinder 9 diametral gegenüberliegenden Seite der Lenkspindel 3.

Die Oberschale 11 weist einen inneren sowie einen äußeren umlaufenden Rand 16 bzw. 17 auf, durch die ein Einbauraum zum Einsetzen und Befestigen von Funktionsmodulen gebildet ist, wobei in dem dargestellten Ausführungsbeispiel zwei Lenkstockschalter 18, 19 in einer Funktionsmodulebene angeordnet eingesetzt sind. Die Lenkstockschalter 18, 19 selbst sind an der Oberschale 11 befestigt und kontaktieren eine Leiterplatte 20. Insbesondere der äußere umlaufende Rand 17 dient auch als zusätzliche Maßnahme zur Sicherung des Schloßraumes gegenüber einem mechanischen Eindringen aus radialer Richtung.

Infolge des eingesetzten Materiales, insbesondere für die untere Tragschale 2 ist ein Eindringen in den Schloßraum 12 auf mechanische Art und Weise durch Zerstören der unteren Tragschale 2 infolge des eingesetzten Materiales gegenüber vorbekannten Schloßkörpern deutlich erschwert. Besonders gegenüber einem Angriff mit Kältemitteln macht sich das zwischen der unteren Tragschale 2 und dem Riegelglied 14 befindliche Luftpolster 21 insofern bemerkbar, daß eine Übertragung der Kälte von der unteren Tragschale 2 auf das Riegelglied 14 bzw. seinen Zapfen 15 mehrere Übergänge benötigt.

An der Tragschale 2 den Schloßraum 12 querend sind Dorne D als Fortsätze angeformt, die ebenfalls die Oberschale 11 durchgreifen. Die Dorne D erstrecken sich bis kurz vor elektronische, auf der Leiterplatte 20 befindliche Betriebskomponenten K, die zum Betrieb des Kraftfahrzeuges notwendig sind, wobei eine Zerstörung zumindest eines dieser Betriebskomponenten einen bestimmungsgemäßen Betrieb des Kraftfahrzeuges nicht mehr gestattet. Bei einer Manipulation der unteren Tragschale 2, etwa durch Hammerschläge werden die Dorne D zu den elektronischen Betriebskomponenten K bewegt und in diese hineingetrieben. Infolge dessen sind diese zerstört. Da es sich bei diesen elektronischen Komponenten um solche handelt, die notwendig sind, um das Kraftfahrzeug selbsttätig zu fahren, ist ein Fahren des Kraftfahrzeuges nach einer Zerstörung dieser Komponenten K verhindert.

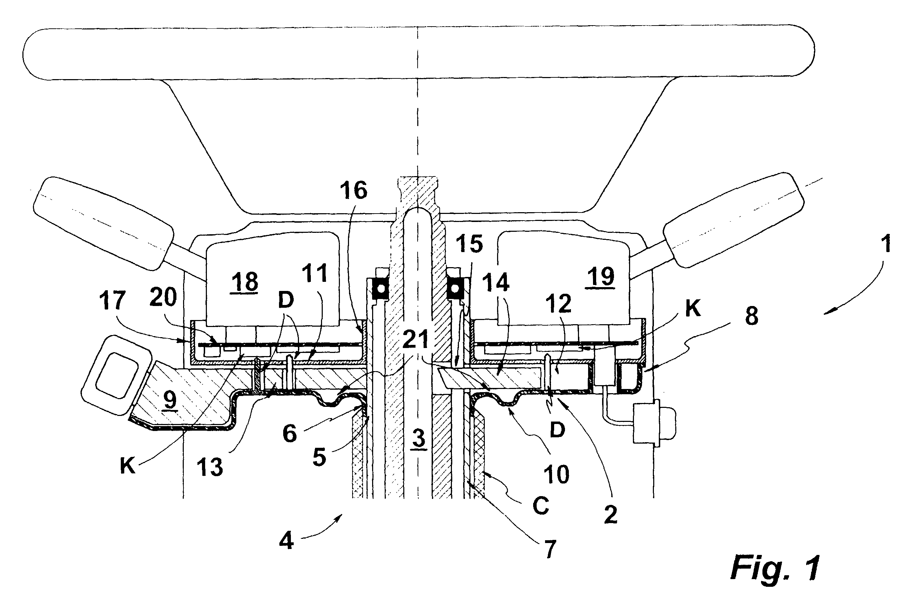

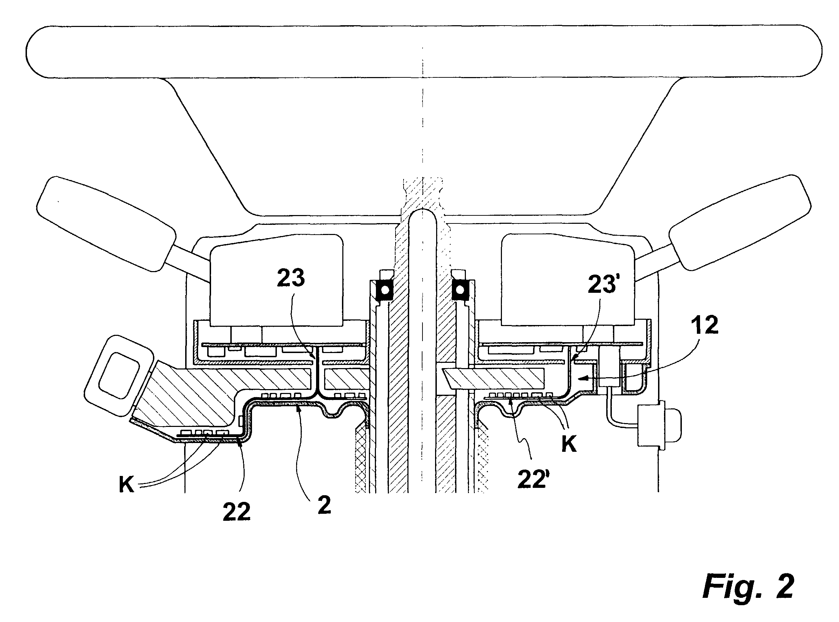

Figur 2 zeigt ein weiteres Ausführungsbeispiel der Erfindung, welches grundsätzlich aufgebaut ist wie dasjenige der Figur 1, so daß gleiche Teile mit gleichen Bezugszeichen gekennzeichnet sind, soweit dies erforderlich ist. Im Unterschied zu dem Ausführungsbeispiel der Figur 1 sind zur Sicherung der Lenkspindelsperreinrichtung 13 oberhalb der unteren Tragschale 2 auf flexiblen Leiterplatten 22, 22' elektronische Betriebskomponenten K angeordnet. Diese elektronischen Komponenten K sind über entsprechende Leiterbahnen miteinander verbunden. Über Anschlußfahnen 23, 23' sind die flexiblen Leiterplatten 22, 22' mit entsprechenden Anschlüssen auf der Leiterplatte 20 verbunden. Bei einem versuchten manipulativen Eingriff in den Schloßraum 12 von der Unterseite des Lenksäulenmoduls 1 her werden die elektronischen Komponenten K oder die diese verbindenden Leiterbahnen zerstört, so daß anschließend ein selbständiges Fahren des Kraftfahrzeuges nicht mehr möglich ist. Bei diesen elektronischen Komponenten K handelt es sich ebenfalls um solche, die notwendig sind, um das Kraftfahrzeug selbständig zu fahren. Bei einem versuchten thermischen Angriff auf die Lenkspindelsperreinrichtung 13 von Seiten der unteren Tragschale 2 her werden zwangsweise auch die elektronischen Betriebskomponenten K zerstört, so daß ein selbständiges Fahren des Kraftfahrzeuges verhindert ist.

Aus der Beschreibung der Erfindung wird deutlich, daß durch die beanspruchte Kapselung des Riegelgliedes bzw. der gesamten Lenkwinkelsperreinrichtung durch relevante bzw. notwendige elektrische/elektronische Komponenten ein wirksamer Diebstahlschutz für ein Kraftfahrzeug bewirkt ist. Verbessert werden kann ein solcher Diebstahlschutz durch die Ausbildung eines zusätzlich mechanisch geschützten Schloßraumes wie in den in den Figuren dargestellten Ausführungsbeispielen vorgesehen.

### Zusammenstellung der Bezugszeichen

- 1: Lenksäulenmodul
- 2: Tragschale
- 3: Lenkspindel
- 4: Lenksäule
- 5: Öffnung
- 6: Befestigungsrand
- 7: Mantelrohr
- 8: Außenwand
- 9: Schließzylinder
- 10: Sicke
- 11: Oberschale
- 12: Schloßraum
- 13: Lenkspindelsperreinrichtung
- 14: Riegelglied
- 15: Riegelzapfen
- 16: Innerer Rand
- 17: Äußerer Rand
- 18: Lenkstockschalter
- 19: Lenkstockschalter
- 20: Leiterplatte
- 21: Luftpolster
- 22, 22': Flexible Leiterplatte
- 23, 23': Anschlußfahnen

- C: Crashelement
- D: Dorn
- K: Elektronische Betriebskomponenten

## Patentansprüche

1. Einrichtung zum Sperren der Drehbarkeit der Lenkspindel (3) eines Kraftfahrzeugs umfassend ein bewegbares, in seiner Sperrstellung in die Lenkspindel (3) eingreifend angeordnetes, in einem Schloßraum (12) befindliches Riegelglied (14) sowie eine Betätigungseinrichtung (9) zum Betätigen des Riegelgliedes (14), **dadurch gekennzeichnet, daß** der Schloßraum (12) gegenüber einem manipulativen Eingriff passiv durch zum selbständigen Fahren des Kraftfahrzeuges benötigte, elektrische/elektronische Betriebskomponenten (K) dadurch gesichert ist, **daß** diese Betriebskomponenten (K) in einer solchen Lage bezüglich des Schloßraumes (12) angeordnet sind, **daß** bei einem manipulativen Eingriff die Funktionstüchtigkeit von zumindest einer solchen Betriebskomponente (K) zerstört ist.

2. Einrichtung nach Anspruch 1, **dadurch gekennzeichnet, daß** die eingesetzten elektrischen/elektronischen Betriebskomponenten (K) solche sind, die zum Fahren des Kraftfahrzeuges notwendig sind.

3. Einrichtung nach Anspruch 2, **dadurch gekennzeichnet, daß** die Lenkspindelsperreinrichtung (13) Teil eines Lenksäulenmoduls (1) mit elektrischen/elektronischen Funktionsmodulen (18, 19) ist und elektrische/elektronische Komponenten (K) dieser Funktionsmodule (18, 19) die elektrischen/elektronischen Komponenten (K) zur Sicherung des Schloßraumes (12) sind.

4. Einrichtung nach einem der Ansprüche 1 bis 3, **dadurch gekennzeichnet, daß** als Sicherungskomponenten elektrische Steckverbinder den Schloßraum querend angeordnet sind.

5. Einrichtung nach einem der Ansprüche 1 bis 3, **dadurch gekennzeichnet, daß** die zur Sicherung des Schloßraumes (12) eingesetzten elektrischen/elektronischen Komponenten (K) auf einer oder mehreren flexiblen Leiterplatten (22, 22') angeordnet sind, welche Leiterplatten (22, 22') zumindest in denjenigen Bereichen, in denen ein manipulativer Eingriff zu erwarten ist, als Schutzschild benachbart zu dem in dem Schloßraum (12) befindlichen Riegelglied (14) angeordnet sind.

6. Einrichtung nach einem der Ansprüche 1 bis 3, **dadurch gekennzeichnet, daß** der Schloßraum (12) durch eine untere Tragschale (2) und eine Oberschale (11) begrenzt ist, wobei die Oberschale (11) Träger einer elektrischen/elektronischen Komponenten (K) tragenden Leiterplatte (20) ist und von der unteren Tragschale (2) abragend und den Schloßraum (12) querende Fortsätze (D) angeordnet sind, die sich bis in den Bereich der elektrischen/elektronischen Komponenten (K) der Leiterplatte (20) erstrecken.

7. Einrichtung nach einem der Ansprüche 1 bis 6, **dadurch gekennzeichnet, daß** die Lenkspindelsperreinrichtung (13) Teil eines Lenksäulenmoduls (1) mit elektrischen/elektronischen Funktionsmodulen (18, 19) ist und dieses Lenksäulenmodul (1) eine untere, an dem Mantelrohr (7) der Lenksäule (4) befestigbare, in einer Ebene quer zur Längsachse der Lenksäule (4) angeordnete und die Lenkspindel (3) einschließende Tragschale (2) aufweist, die die untere Begrenzung des Schloßraumes (12) bildet, der oberseitig durch eine weitere, sich auf der unteren Tragschale (2) abstützenden Oberschale (11) und in radialer Richtung durch eine zumindest an einer der beiden Schalen (2 bzw. 11) angeformten Außenwand (8) begrenzt ist.

8. Einrichtung nach Anspruch 7, **dadurch gekennzeichnet, daß** die untere Tragschale (2) aus einem Blechstück aus einem harten, zähen Material im Wege eines Kaltumformprozesses hergestellt ist.

9. Einrichtung nach Anspruch 7 oder 8, **dadurch gekennzeichnet, daß** das in dem Schloßraum enthaltene Riegelglied (14) die Lenkspindel (3) ringförmig umgreifend ausgebildet ist.

10. Einrichtung nach einem der Ansprüche 7 bis 9, **dadurch gekennzeichnet, daß** das Riegelglied (14) mit Abstand zur inneren Oberfläche der unteren Tragschale (2) einen Luftpolster (21) belassend angeordnet ist.
